(19) Europäisches Patentamt

European Patent Office

Office européen des brevets

(11) **EP 3 081 328 A1**

(12) # EUROPEAN PATENT APPLICATION
published in accordance with Art. 153(4) EPC

(43) Date of publication:
**19.10.2016 Bulletin 2016/42**

(21) Application number: **14869931.7**

(22) Date of filing: **08.12.2014**

(51) Int Cl.:
**B23K 35/362** *(2006.01)*     **B23K 35/30** *(2006.01)*
**C22C 38/00** *(2006.01)*     **C22C 38/04** *(2006.01)*

(86) International application number:
**PCT/JP2014/082456**

(87) International publication number:
**WO 2015/087843 (18.06.2015 Gazette 2015/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.12.2013   JP 2013257686**

(71) Applicant: **Kabushiki Kaisha Kobe Seiko Sho
(Kobe Steel, Ltd.)
Kobe-shi, Hyogo 651-8585 (JP)**

(72) Inventors:
• **KANO, Satoru**
  **Fujisawa-shi, kanagawa 251-8551 (JP)**
• **OTA, Makoto**
  **Fujisawa-shi, kanagawa 251-8551 (JP)**

(74) Representative: **Müller-Boré & Partner
Patentanwälte PartG mbB
Friedenheimer Brücke 21
80639 München (DE)**

(54) **FLUX FOR SUBMERGED ARC WELDING**

(57)     Provided is a flux for submerged arc welding that has good welding workability and can reduce the diffusion hydrogen content in a weld metal in the use of either an AC or a DC welding power source. The flux for submerged arc welding includes: MgO: 25 to 35% by mass; F (in terms of $CaF_2$): 15 to 30% by mass; $Al_2O_3$: 10 to 25% by mass; $SiO_2$: 10 to 20% by mass; at least one of Na (in terms of $Na_2O$) and K (in terms of $K_2O$): 0.5 to 5.5% by mass in total; Fe (in terms of FeO) : 0.5 to 5% by mass; $TiO_2$: 1 to 5% by mass; CaO: 6% by mass or less; and Mn (in terms of MnO) : less than 2.0% by mass; and further includes: water-soluble $SiO_2$: less than 1% by mass; wherein the flux satisfies the following numerical expression (I):

$$0.5 \leqq \frac{[MgO]}{[Al_2O_3] + [CaF_2] + [TiO_2]} \leqq 1.1 \quad \cdots \quad (\text{I})$$

EP 3 081 328 A1

**Description**

Technical Field

The present invention relates to a flux for use in submerged arc welding. More specifically, the present invention relates to a high-temperature sintered flux.

Background Art

Fluxes for use in submerged arc welding are mainly classified into a fused flux and a sintered flux in terms of the form of flux. The fused flux is manufactured by melting various materials in an electric furnace and the like and crushing them. Whereas, the sintered flux is manufactured by bonding various raw materials with a binder, such as alkaline silicate, granulating them, and sintering the granules.

In general, the sintered fluxes are further classified, depending on the sintering temperature, into a low-temperature sintered flux produced by sintering at 400 to 600°C and a high-temperature sintered flux produced by sintering at 600 to 1,200°C. The low-temperature sintered flux has been conventionally studied from various aspects to reduce the diffusion of hydrogen into a weld metal (see Patent Documents 1 to 3) . For example, Patent Documents 1 to 3 disclose a technique in which the ratio of carbonates to the flux is set in a specific range, thereby generating $CO_2$ gas during welding, thus reducing a partial pressure of $H_2$ gas.

To improve moisture absorption properties without using carbonates, another means is proposed to reduce a hydrogen content in the weld metal by specifying an A value, which is a characteristic value mainly derived from a flux component, as well as the maximum value of a specific surface area of the flux (see Patent Document 4). Whereas, in the high-temperature sintered flux, a technique is proposed to decrease the content of diffused hydrogen by specifying the kind of material, such as a basic oxide, an alkali metal fluoride, and an acid oxide, as well as a content thereof (see Patent Document 5).

Patent Document 1: JP 49-70839 A
Patent Document 2: JP 53-95144 A
Patent Document 3: JP 51-87444 A
Patent Document 4: JP 9-99392 A
Patent Document 5: JP 62-68695 A

Disclosure of the Invention

Problems to be Solved by the Invention

However, the above-mentioned technique for reducing the diffusion hydrogen content in the sintered flux has the following problems. First, in the low-temperature sintered flux with the carbonates added, as mentioned in Patent Documents 1 to 3, the use of a DC welding power source increases the consumed amount of the flux, promotes the decomposition of the carbonates, compared to the use of an AC welding power source, and coarsens the surfaces of beads because of large amounts of CO gas and $CO_2$ gas generated during the welding. Further, such a flux has the problem that pockmarks are generated, thereby degrading the outer appearance and shape of beads.

The technique disclosed in Patent Document 4 handles MnO as a hydrate component, regarding the A value which is an index of the hydration properties. However, MnO can become non-hydrated component, in combination with other flux components. In the technique disclosed in Patent Document 4, the specific surface area of the flux is reduced. However, the specific surface area of the flux drastically affects the shield properties of a slag during welding. Specifically, when the specific surface area of the flux is reduced, the shield properties of the slag might be degraded, thus increasing a nitrogen content in the weld metal, reducing the toughness of the weld metal.

Whereas, in the technique disclosed in Patent Document 5 regarding the high-temperature sintered flux, flux components are designed mainly to be compatible with the AC welding power source. However, this technique does not take into consideration the degradation in welding workability that would be most afraid of in the use of the DC welding power source. That is, in the flux disclosed in Patent Document 5, the use of the DC welding power source does not gain the substantially same effects as that in use of the AC welding power source.

Accordingly, it is a main object of the present invention to provide a flux for submerged arc welding that has good welding workability and can reduce the diffusion hydrogen content in a weld metal in the use of either the AC or DC welding power source.

Means for Solving the Problems

A flux for submerged arc welding according to the present invention includes: MgO: 25 to 35% by mass; F (in terms of CaF$_2$) : 15 to 30% by mass; Al$_2$O$_3$: 10 to 25% by mass; SiO$_2$: 10 to 20% by mass; at least one of Na (in terms of Na$_2$O) and K (in terms of K$_2$O) : 0.5 to 5.5% by mass in total; Fe (in terms of FeO) : 0.5 to 5% by mass; TiO$_2$: 1 to 5% by mass; CaO: 6% by mass or less; and Mn (in terms of MnO) : less than 2.0% by mass; and further includes: water-soluble SiO$_2$: less than 1% by mass; wherein the flux satisfies the following numerical expression 1:

[Equation 1]

$$0.5 \leqq \frac{[MgO]}{[Al_2O_3] + [CaF_2] + [TiO_2]} \leqq 1.1$$

where [Al$_2$O$_3$] is an Al$_2$O$_3$ content, [MgO] is an MgO content, [CaF$_2$] is an F content (in terms of CaF$_2$), and [TiO$_2$] is a TiO$_2$ content.

In the flux for submerge arc welding in the present invention, a C content may be restricted to 0.2% by mass or less.

The flux for submerge arc welding in the present invention is sintered, for example, at a temperature of 800°C or higher.

Effects of the Invention

According to the present invention, since the contents of respective components are specified, and the ratio of the MgO content to the total contents of Al$_2$O$_3$, F and TiO$_2$ is set in a specific range, the flux for submerged arc welding can have good welding workability and reduce the diffusion hydrogen content in the weld metal in the use of either the AC or DC welding power source.

Brief Description of the Drawings

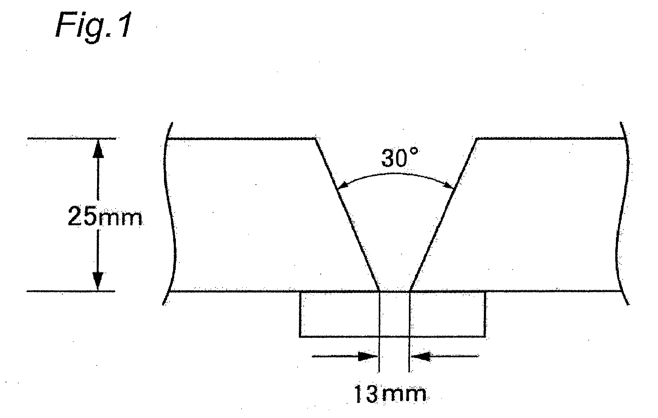

Fig. 1 is a diagram showing the shape of a groove in a test specimen used at a welding test in Examples.

Mode for Carrying Out the Invention

Embodiments for carrying out the present invention will be described in detail below. The present invention is not limited to the embodiments mentioned below.

The inventors have diligently studied by experiments to solve the above-mentioned problems and found out the following. When using the DC welding power source, to keep the slag removability adequate, the content of SiO$_2$ in the flux should be reduced as much as possible. Regarding MgO, unless the amount of added MgO is set more than that in the flux mentioned in Patent Document 5, the slag removability cannot be improved.

A flux for submerged arc welding according to the embodiment of the present invention (hereinafter simply referred to as a "flux") is restricted such that a SiO$_2$ content is in a range of 10 to 20% by mass, an MgO content is in a range of 25 to 35% by mass, and a water-soluble SiO$_2$ content is 1% by mass or less. In the flux of the present embodiment, each components are adjusted to satisfy the numerical expression 2 below:

[Equation 2]

$$0.5 \leqq \frac{[MgO]}{[Al_2O_3] + [CaF_2] + [TiO_2]} \leqq 1.1$$

where [MgO] is an MgO content, [Al$_2$O$_3$] is an Al$_2$O$_3$ content, [CaF$_2$] is an F content (in terms of CaF$_2$), and [TiO$_2$] is a

TiO$_2$ content.

The reason for restricting the composition of the flux in the present embodiment will be described below. The content of each component in the flux of the present embodiment is a value obtained by converted a value quantified by a method defined by JIS Z 3352:2010, in terms of oxide or fluoride, unless otherwise specified.

[MgO: 25 to 35% by mass]

MgO is a component that significantly contributes to improving the slag removability, and thus is essential for ensuring the adequate slag removability regardless of the type of a welding power source. However, when the MgO content is less than 25% by mass, the effect of improving slag removability cannot be sufficiently obtained. Whereas, when the MgO content exceeds 35% by mass, the shape of the bead is degraded, whereby defects, including slag inclusion, lack of fusion and undercut, are more likely to occur, depending on the type of the welding power source. In particular, in the AC welding power source, the welding defects, such as the slag inclusion and the lack of fusion, mentioned above, occur remarkably. Therefore, the MgO content is set at 25 to 35% by mass.

From the viewpoint of suppressing the occurrence of defects, the MgO content is preferably 32% by mass or less, and more preferably 30% by mass or less. The term "MgO content" as used herein means a value obtained by expressing, in terms of MgO, the whole Mg content in the flux that is determined by analysis with the method defined by JIS Z 3352:2010 (e.g., JIS M 8222:1997 and the like). The whole Mg content measured by this method sometimes contains other components, such as MgF$_2$, in addition to MgO. However, the contents of.these other components are very little. Thus, these other components do not affect the effects of MgO mentioned above as long as the MgO content (the whole Mg content in terms of MgO) is set in the above-mentioned range.

[F (in terms of CaF$_2$): 15 to 30% by mass]

A fluoride, such as CaF$_2$, has the effect of enhancing the electric conductivity and fluidity of the molten slag. The fluoride is one of components that affect the high-temperature viscosity of the molten slag. This effect is in proportion to the F content, like CaO to be mentioned later. Specifically, the F content (in terms of CaF$_2$) of less than 15% by mass cannot sufficiently exhibit the above-mentioned effect, and cannot also expect another effect of promoting exhaust of CO gas from the molten slag to improve resistance to pockmark.

Whereas, when the F content (in terms of CaF$_2$) exceeds 30% by mass, the fluidity of the molten slag becomes excessively high, thereby degrading the shape of the bead. Thus, the F content (in terms of CaF$_2$) is set at 15 to 30% by mass. From the viewpoint of improving the resistance to pockmark, the F content (in terms of CaF$_2$) is preferably 18% by mass or more, and more preferably 20% by mass or more. Furthermore, from the viewpoint of improving the shape of the bead, the F content (in terms of CaF$_2$) is preferably 27% by mass or less, and more preferably 25% by mass or less.

Here, the term "F content" as used herein means a value obtained by expressing, in terms of CaF$_2$, the whole F content in the flux that is determined by analysis with the method defined by JIS Z 3352:2010 (e.g., JIS K 1468-2:1999 and the like). The fluoride component in the flux of the present embodiment is mainly CaF$_2$, but sometimes includes AlF$_3$, MgF$_2$, etc., in addition thereto. The AlF$_3$, MgF$_2$, etc. don't affect the aforesaid effect of the fluoride as long as the F content (the whole F content in terms of CaF$_2$) is in the above-mentioned range.

[Al$_2$O$_3$: 10 to 25% by mass]

Al$_2$O$_3$ is a component for adjusting the viscosity and melting point of molten slag and has an effect of improving the shape of a bead during welding. However, when the Al$_2$O$_3$ content is less than 10% by mass, the above-mentioned effect cannot be sufficiently obtained. Whereas, when the Al$_2$O$_3$ content exceeds 25% by mass, the melting point of the molten slag becomes excessively high, thus degrading the shape of the bead in welding. Therefore, the Al$_2$O$_3$ content is set at 10 to 25% by mass.

From the perspective of adjusting the viscosity and melting point of the molten slag, the Al$_2$O$_3$ content is preferably 15% by mass or more, and more preferably 17% by mass or more. Furthermore, from the perspective of the appropriate melting point of the molten slag, the Al$_2$O$_3$ content is preferably 22% by mass or less, and more preferably 20% by mass or less. This restriction can further improve the shape of the bead.

Here, the term "Al$_2$O$_3$ content" as used herein means a value obtained by expressing, in terms of Al$_2$O$_3$, the whole Al content in the flux that is determined by analysis with a method defined by JIS Z 3352:2010 (e.g. , JIS M 8220: 1995 and the like). The whole Al content measured by this method sometimes contains other components, such as AlF$_3$, in addition to Al$_2$O$_3$. However, the contents of these other components are very little. Thus, the other components don't affect the effects of Al$_2$O$_3$ as long as the Al$_2$O$_3$ content (the whole Al content in terms of Al$_2$O$_3$) is set in the above-mentioned range.

[SiO$_2$: 10 to 20% by mass]

SiO$_2$ has the effect of mainly improving the outer appearance and shape of the bead by imparting the appropriate viscosity to the molten slag. When the SiO$_2$ content is less than 10% by mass, however, the above-mentioned effect is not sufficiently obtained, thus degrading the outer appearance and shape of the bead. When the SiO$_2$ content exceeds 20% by mass, which means that the viscosity of the molten slag becomes excessive, the slag removability is degraded, and burning of the slags onto a weld bead becomes severe. Therefore, the SiO$_2$ content is set at 10 to 20% by mass.
From the perspective of improving the outer appearance and shape of the bead, the SiO$_2$ content is preferably 13% by mass or more, and more preferably 15% by mass or more. Furthermore, in view of the appropriate viscosity of the molten slag, the SiO$_2$ content is preferably 18% by mass or less.
Here, the term "SiO$_2$ content" as used herein means a value obtained by expressing, in terms of SiO$_2$, the whole Si content in the flux that is determined by analysis with the method defined by JIS Z 3352:2010 (e.g., JIS M 8214 : 1995 and the like). The whole Si content measured by this method sometimes contains other components in addition to SiO$_2$, including a Si added into an alloy, such as a Fe-Si alloy. However, these other components don't affect the effects of SiO$_2$ mentioned above as long as the SiO$_2$ content (the whole Si content in terms of SiO$_2$) is set in the above-mentioned range. Here, the SiO$_2$ content as used herein includes the below-mentioned water-soluble SiO$_2$ content.

[At least one of Na (in terms of Na$_2$O) and/or K (in terms of K$_{2O}$) : 0.5 to 5.5% by mass in total]

Na and K are components that mainly affect the arc stability and moisture absorption properties of the flux in welding. Na and K are added, mainly in the form of oxide, such as Na$_2$O and K$_2$O. However, when the total of the Na content (in terms of Na$_2$O) and the K content (in terms of K$_2$O) is less than 0.5% by mass, the arc voltage in welding becomes unstable, thus degrading the outer appearance and shape of the bead.
Whereas, when the total of the Na content (in terms of Na$_2$O) and the K content (in terms of K$_2$O) exceeds 5.5% by mass, the moisture absorption properties of the flux are degraded, and the arc becomes too strong and unstable, which degrades the outer appearance and shape of the bead. Thus, the total of the Na content (in terms of Na$_2$O) and the K content (in terms of K$_2$O) is set at 0.5 to 5.5% by mass. The flux of the present embodiment may have at least one of Na and K added thereto.
From the perspective of stabilizing the arc voltage, the total of the Na content (in terms of Na$_2$O) and the K content (in terms of K$_2$O) is preferably 1.5% by mass or more, and more preferably, 2.0% by mass or more. Furthermore, in view of the moisture absorption properties of the flux, the total of Na content (in terms of Na$_2$O) and the K content (in terms of K$_2$O) is preferably 4.5% by mass or less, and more preferably 3.5% by mass or less.
Here, the term "Na content and K content" as used herein means a value obtained by expressing, in terms of NaO and K$_2$O, respectively, the whole Na content and whole K content in the flux that are determined by analysis with the method defined by JIS Z 3352:2010 (e.g., JIS M 8852: 1998 and the like). The Na component and K component of the flux in the present embodiment are mainly Na$_2$O and K$_2$O, respectively, but sometimes include NaAlSi$_3$O$_8$, KAlSi$_3$O$_8$, and the like in addition thereto.

[Fe (in terms of FeO): 0.5 to 5% by mass]

Fe has the effect of promoting deoxidation phenomenon to enhance the resistance to pockmark, and is added, mainly in the form of metal powder made of Fe-Si and the like. The above-mentioned effect is proportional to the amount of presence of Fe. When the Fe content (in terms of FeO) is less than 0.5% by mass, particularly in the use of the DC welding power source, the above-mentioned effect cannot be sufficiently obtained. Whereas, the Fe content (in terms of FeO) exceeding 5% by mass affects the solidification temperature of the slag, thus degrading the outer appearance and shape of the bead and the slag removability. Therefore, the Fe content (in terms of FeO) is set at 0.5 to 5% by mass.
In view of the resistance to pockmark, the Fe content (in terms of FeO) is preferably 1% by mass or more, and more preferably 1.5% by mass or more. Taking into consideration the influence on the solidification temperature of a slag, the Fe content (in terms of FeO) is preferably 4% by mass or less, and more preferably 3% by mass or less.
Here, the term "Fe content" as used herein means a value obtained by expressing, in terms of FeO, the whole Fe content in the flux that is determined by analysis with the method defined by JIS Z 3352:2010 (e.g., JIS M 8202:2000 and the like). The Fe content sometimes covers, in addition to the Fe content added as the metal powder, the content of FeO, Fe$_2$O$_3$, Fe$_3$O$_4$, etc., that is added as inevitable impurities.

[TiO$_2$: 1 to 5% by mass]

TiO$_2$ is a component that is effective in improving the slag removability and has the effect of making the shape of the bead better. Part of TiO$_2$ is converted into Ti by a reduction reaction during welding. Ti is added into the weld metal, contributing to improving the toughness of the flux. The above-mentioned effect is in proportion to the amount of presence of $TiO_2$ ($TiO_2$ content). When the upper limit of $TiO_2$ content exceeds 5% by mass, the shape of the bead is degraded. When the $TiO_2$ content is less than 1% by mass, the slag removability and bead shape are degraded. Therefore, the $TiO_2$ content is set at 1 to 5% by mass.

Here, the term "$TiO_2$ content" as used herein means a value obtained by expressing, in terms of $TiO_2$, the whole Ti content in the flux that is determined by analysis with the method defined by JIS Z 3352:2010 (e.g., JIS M 8219:2012 and the like).

[CaO (corresponding value): 6% by mass or less]

CaO is a component that increases the basicity of the slag, thereby enhancing the cleaning degree of weld metal, and also affects the fluidity of the molten slag. CaO exhibits the aforesaid effects in proportion to the amount of presence of CaO. However, when the CaO content exceeds 6% by mass, the fluidity of the molten slag becomes excessive to degrade the outer appearance and shape of the bead. Therefore, the CaO content is restricted to 6% by mass or less. From the perspective of the fluidity of the molten slag, the CaO content is preferably 4% by mass or less, and more preferably 2% by mass or less.

The flux in the present embodiment includes, in addition to CaO as a Ca component, $CaF_2$ mentioned above. Here, the term "CaO content" as used herein means a corresponding value determined from the whole Ca content and the whole F content that are obtained by analysis with the method defined by JIS Z 3352:2010. Thus, if the $CaF_2$ content is very large, a CaO content can be zero (0) according to JIS Z 3352:2010 in some cases.

[Mn (in terms of MnO): less than 2% by mass]

Mn is a component affecting the viscosity and solidification temperature of the molten slag, while improving the resistance to pockmark. The inventors have made a study on various tests within the scope of the present invention and confirmed that the oxygen content in the weld metal tends to increase as the amount of Mn to be added increases. An increase in oxygen content in the weld metal is one of the causes for degradation of toughness, so that toughness of the weld metal is degraded when the Mn content (in terms of MnO) is 2% by mass or more. Therefore, in the flux of the present embodiment, Mn is regarded as a regulatory element and the content is regulated to 2% by mass or less in terms of MnO.

Mn included in the flux of the present embodiment is mixed from raw materials as inevitable impurities. Here, the term "Mn content" as used herein means a value obtained by expressing, in terms of MnO, the whole Mn content in the flux that is determined by analysis with the method defined by JIS Z 3352:2010 (e.g., JIS M 8232:2005 and the like).

[Water-soluble $SiO_2$: 1% by mass or less]

As the content of water-soluble $SiO_2$ exceeded 1% by mass, the resistance to moisture absorption of the flux is degraded, and the diffusion hydrogen content of the weld metal is increased. Therefore, the water-soluble $SiO_2$ content is restricted to 1% by mass or less. From the perspective of improving the resistance to moisture absorption and reducing the diffusion hydrogen content, the water-soluble $SiO_2$ content is preferably 0.8% by mass or less, and more preferably 0.6% by mass or less.

The water-soluble $SiO_2$ is derived mainly from a binder, such as liquid glass. To reduce its content, it is effective to sinter the flux at a temperature equal to or higher than a temperature at which the binder is less likely to absorb moisture. Specifically, the sintering temperature is most preferably set at 800°C or higher.

The water-soluble $SiO_2$ content in the flux can be measured by the following method. First, the flux was crushed into a particle size of 300 $\mu$m or less by a vibrational mill, followed by sampling about 0. 2 g of each specimen for measurement therefrom (step 1). Then, the above-mentioned specimen and 100 ml of distilled water were charged into a conical flask made of quartz, and boiled for 4 hours, thereby extracting a soluble component (step 2). After leaving the extracted solution for 12 hours or more, precipitates, floating substances, and the like in the extracted solution were removed, and then the Si content is quantified by an absorption photometry (step 3).

Here, the term "water-soluble $SiO_2$" as used herein means a value obtained by expressing, in terms of $SiO_2$, the whole Si content in the flux determined by analysis using the method mentioned above, but is discriminated from the above-mentioned whole $SiO_2$ and has its content specified.

[[MgO]/([$Al_2O_3$] + [$CaF_2$] + [$TiO_2$]) : 0.5 to 1.1]

The respective contents of MgO, $Al_2O_3$, F, and $TiO_2$ are specified. Further, the flux in the present embodiment also specifies the ratio of the MgO content to the total of the $Al_2O_3$ content, the F content ($CaF_2$) and the $TiO_2$ content

(= $[MgO]/([Al_2O_3] + (CaF_2] + [TiO_2]))$.

The inventors have studied by experiments about the moisture absorption properties and welding workability of the flux with MgO added thereto, and found out that the ratio of the MgO content to the total of the $Al_2O_3$ content, the F content ($CaF_2$) and the $TiO_2$ content (= $[MgO]/([Al_2O_{3]} + [CaF_2] + [TiO_2])$) significantly affects the moisture absorption properties and welding workability. For example, in the use of the DC welding power source, the flux consumption is increased, compared to the use of the AC welding power source. Thus, the Si content in the weld metal is increased to drastically degrade the slag removability. Here, the slag removability can be improved by addition of MgO.

However, since MgO has excellent hydration properties, the addition of MgO into the flux degrades the moisture absorption properties, thereby increasing the diffusion hydrogen content in the weld metal. Whereas, $Al_2O_3$, F and $TiO_2$ are non-hydrous components, and have the great effect of improving the moisture absorption properties if being added. Unlike the technical knowledge in the related art, it is found out that among them, F is used in combination with $Al_2O_3$ and $TiO_2$ to exhibit the effect of improving the moisture absorption properties of the flux to contribute to decreasing the diffusion hydrogen content.

When $[MgO]/([Al_2O_3] + [CaF_2] + [TiO_2])$ is less than 0.5, the slag removability is drastically degraded during welding by the DC welding power source. When $[MgO]/([Al_2O_3] + [CaF_2] + [TiO_2])$ exceeds 1.1, the moisture absorption properties are degraded, thus increasing the diffusion hydrogen content in the weld metal. The amount of each component added is adjusted such that the ratio of $[MgO]/([Al_2O_3] + [CaF_2] + [TiO_2]$ is in a range of 0.5 to 1.1. Thus, the degradation in moisture absorption properties can be suppressed.

[C: 0.2% by mass or less]

C is derived from a carbonate included as an impurity in each rawmaterial of the flux, and inevitably introduced thereinto. Whereas, in the use of the DC welding power source as mentioned above, the consumption of the flux is increased, and the decomposition of the carbonate is further promoted, compared to the use of the AC welding power source. Thus, even if the C content is very small, a large volume of CO gas and $CO_2$ gas is generated during welding, leading to degradation in the resistance to pockmark and the outer appearance and shape of the bead. Thus, to prevent the degradation in welding workability, the C content in the flux is preferably reduced to 0.2% by mass or less.

In particular, from the perspective of improving the resistance to pockmark, the C content is preferably restricted to 0.1% by mass or less, and more preferably 0.05% by mass or less. To keep the resistance to pockmark adequate, the C content is preferably as small as possible. The term "C content" as used herein means a value determined by analysis with the method defined by JIS Z 2615:2009.

[Other components]

Other components except for the above-mentioned components in the flux of the present embodiment include Zr, Ba, Li, P and S. Among these inevitable impurities, each of Zr, Ba and Li is preferably restricted to 1.0% by mass or less, and particularly, each of P and S that affect the quality of weld metal is preferably restricted to 0.05% by mass or less.

[Manufacturing Method]

When manufacturing the flux in the present embodiment, for example, the raw material powder is blended to have the above-mentioned composition, then mixed and kneaded together with a binder, granulated, and sintered. At this time, suitable bonding agents (binders) can use, for example, aqueous solutions, such as polyvinyl alcohol, and liquid glass. Granulation methods are not specifically limited, but may preferably include method using a rolling granulator, an extrusion granulator, and the like.

Further, the granulated flux is preferably subjected to grain-size regulation, including dust removal and crushing of coarse grains, to have grains with a grain size of 2.5 mm or less. Whereas, the sintering process after the granulation can be performed by a rotary kiln, a stationary batch furnace, a belt baking furnace, and the like. The sintering temperature at this time can be set, for example, at 600 to 1,200°C. From the viewpoint of making the binder less likely to absorb moisture as mentioned above, the sintering temperature is preferably set at 800°C or higher.

As mentioned above in detail, the flux of the present embodiment sets the content of each component in a corresponding specific range, and adjusts the contents of these components such that the ratio of the MgO content to the total of the $Al_2O_3$ content, F content and $TiO_2$ content falls within a specific range. Thus, even if the welding power source is of either the AC or DC type, it is possible to make the welding workability better and to reduce the diffusion hydrogen content in the weld metal.

Examples

The effects of the present invention will be specifically described by way of Examples and Comparative Examples of the present invention. In Examples, submerged arc welding tests were performed using steel plates shown in Table 1 below and wires shown in Table 2 while the steel plates have the shape of a groove shown in Fig. 1, under welding conditions (A or B) shown in Table 3 below. The performances of the fluxes in Examples shown in Table 4 below and in Comparative Examples shown in Table 5 below were evaluated. In Examples, raw materials were blended to have the composition shown in Tables 4 and 5, then mixed and kneaded together with a binder (liquid glass), granulated, and further sintered using a rotary kiln at the temperatures shown in Table 4 and 5 below, followed by the grain-size regulation, whereby the fluxes having the grain size of 2.5 mm or less were obtained.

[Table 1]

| Plate thickness (mm) | Composition (% by mass) | | | | |
|---|---|---|---|---|---|
| | C | Si | Mn | P | S |
| 25 | 0.16 | 0.35 | 1.32 | 0.007 | 0.001 |

[Table 2]

| Composition (% by mass) | | | | |
|---|---|---|---|---|
| C | Si | Mn | P | S |
| 0.14 | 0.01 | 1.93 | 0.012 | 0.005 |

[Table 3]

| No. | Polarity | Welding current (A) | Arc voltage (V) | Welding rate (cpm) | Wire extension (mm) | Interpass temperature (°C) |
|---|---|---|---|---|---|---|
| A | DC-EP | 550 | 30 | 42 | 30 | ≤ 150 |
| B | AC | 550 | 30 | 42 | 30 | ≤ 150 |

[Table 4]

| | | Flux composition (% by mass) | | | | | | | | | | | | | M | Sintering temperatre (°C) |
| | | Al$_2$O$_3$ | SiO$_2$ | | | MgO | F | Mn | Na+K | Fe | TiO$_2$ | Water-soluble SiO$_2$ | CaO | C | | |
| | | | Alloy-derived | Mineral-derived | Total | | | | | | | | | | | |
|---|---|---|---|---|---|---|---|---|---|---|---|---|---|---|---|---|
| Examples | 1 | 20 | 3 | 13 | 16 | 28 | 25 | 1.1 | 2.3 | 2 | 2 | 0.2 | 4 | 0.015 | 0.60 | 850 |
| | 2 | 25 | 3 | 7 | 10 | 30 | 24 | 1.5 | 2.6 | 2 | 3 | 0.4 | 2 | 0.019 | 0.58 | 850 |
| | 3 | 11 | 3 | 17 | 20 | 30 | 27 | 1.6 | 2.5 | 2 | 2 | 0.5 | 4 | 0.024 | 0.75 | 850 |
| | 4 | 25 | 3 | 12 | 15 | 26 | 24 | 1.6 | 2.6 | 2 | 2 | 0.5 | 2 | 0.021 | 0.51 | 850 |
| | 5 | 10 | 4 | 12 | 16 | 35 | 25 | 1.5 | 2.6 | 3 | 3 | 0.4 | 4 | 0.017 | 0.92 | 850 |
| | 6 | 25 | 4 | 14 | 18 | 29 | 15 | 1.3 | 2.6 | 3 | 2 | 0.3 | 5 | 0.015 | 0.69 | 850 |
| | 7 | 10 | 3 | 14 | 17 | 30 | 29 | 1.2 | 2.4 | 2 | 4 | 0.4 | 5 | 0.025 | 0.70 | 850 |
| | 8 | 25 | 3 | 14 | 17 | 29 | 20 | 0.5 | 2.5 | 2 | 2 | 0.5 | 2 | 0.032 | 0.62 | 850 |
| | 9 | 11 | 3 | 16 | 19 | 30 | 27 | 1.9 | 2.2 | 2 | 3 | 0.5 | 4 | 0.031 | 0.73 | 850 |
| | 10 | 16 | 3 | 16 | 19 | 26 | 28 | 1.5 | 2.2 | 2 | 3 | 0.4 | 3 | 0.021 | 0.55 | 850 |
| | 11 | 19 | 3 | 8 | 11 | 34 | 25 | 1.6 | 2.6 | 2 | 2 | 0.4 | 3 | 0.025 | 0.74 | 850 |
| | 12 | 17 | 3 | 17 | 20 | 33 | 16 | 1.7 | 2.5 | 2 | 3 | 0.5 | 5 | 0.029 | 0.92 | 850 |
| | 13 | 17 | 3 | 8 | 11 | 30 | 30 | 1.2 | 2.4 | 2 | 3 | 0.4 | 4 | 0.027 | 0.60 | 850 |
| | 14 | 19 | 3 | 16 | 19 | 28 | 26 | 0.5 | 2.6 | 2 | 1 | 0.4 | 2 | 0.031 | 0.61 | 850 |
| | 15 | 19 | 3 | 8 | 11 | 31 | 27 | 1.8 | 2.4 | 2 | 3 | 0.4 | 3 | 0.031 | 0.63 | 850 |
| | 16 | 18 | 5 | 13 | 18 | 35 | 15 | 1.3 | 2.5 | 4 | 3 | 0.4 | 4 | 0.036 | 0.97 | 850 |
| | 17 | 16 | 4 | 13 | 17 | 26 | 30 | 1.4 | 2.5 | 3 | 2 | 0.5 | 3 | 0.024 | 0.54 | 850 |
| | 18 | 15 | 4 | 11 | 15 | 34 | 26 | 0.5 | 2.4 | 3 | 3 | 0.4 | 2 | 0.024 | 0.77 | 850 |
| | 19 | 17 | 4 | 13 | 17 | 26 | 27 | 1.8 | 2.4 | 3 | 3 | 0.5 | 3 | 0.017 | 0.55 | 850 |
| | 20 | 15 | 3 | 15 | 18 | 28 | 30 | 0.5 | 2.4 | 2 | 2 | 0.4 | 3 | 0.035 | 0.60 | 850 |
| | 21 | 19 | 3 | 15 | 18 | 35 | 15 | 1.7 | 2.5 | 2 | 3 | 0.4 | 4 | 0.031 | 0.95 | 850 |
| | 22 | 17 | 3 | 13 | 16 | 33 | 26 | 1.3 | 0.6 | 2 | 2 | 0.4 | 3 | 0.017 | 0.73 | 800 |
| | 23 | 15 | 3 | 14 | 17 | 31 | 25 | 1.3 | 5.3 | 2 | 2 | 0.4 | 2 | 0.019 | 0.76 | 800 |

(continued)

| | | Flux composition (% by mass) | | | | | | | | | | | | | M | Sintering temperatre (°C) |
|---|---|---|---|---|---|---|---|---|---|---|---|---|---|---|---|---|
| | | $Al_2O_3$ | $SiO_2$ | | | MgO | F | Mn | Na+K | Fe | $TiO_2$ | Water-soluble $SiO_2$ | CaO | C | | |
| | | | Alloy-derived | Mineral-derived | Total | | | | | | | | | | | |
| | 24 | 16 | 1 | 16 | 17 | 31 | 25 | 1.3 | 2.5 | 0.6 | 3 | 0.4 | 4 | 0.022 | 0.70 | 800 |
| | 25 | 17 | 6 | 10 | 16 | 32 | 23 | 1.4 | 2.8 | 5 | 1 | 0.4 | 2 | 0.034 | 0.78 | 800 |
| | 26 | 15 | 4 | 14 | 18 | 33 | 20 | 1.6 | 2.5 | 3 | 5 | 0.4 | 2 | 0.016 | 0.83 | 800 |
| | 27 | 16 | 4 | 13 | 17 | 30 | 20 | 1.7 | 2.6 | 3 | 8 | 0.4 | 2 | 0.021 | 0.68 | 800 |
| | 28 | 17 | 4 | 12 | 16 | 30 | 25 | 1.5 | 2.7 | 3 | 2 | 0.1 | 3 | 0.039 | 0.68 | 900 |
| | 29 | 18 | 4 | 11 | 15 | 30 | 26 | 1.2 | 2.5 | 3 | 2 | <0.1 | 3 | 0.024 | 0.65 | 1,000 |
| | 30 | 17 | 4 | 12 | 16 | 32 | 26 | 1.2 | 2.5 | 3 | 2 | 0.5 | 1 | 0:023 | 0.71 | 850 |
| | 31 | 15 | 4 | 14 | 18 | 28 | 25 | 1.4 | 2.4 | 3 | 2 | 0.4 | 6 | 0.026 | 0.67 | 850 |
| | 32 | 17 | 4 | 12 | 16 | 31 | 25 | 1.2 | 2.6 | 2 | 2 | 0.4 | 3 | 0.19 | 0.70 | 850 |
| | 33 | 17 | 4 | 13 | 17 | 30 | 24 | 1.5 | 2.7 | 3 | 2 | 0.5 | 3 | 0.39 | 0.70 | 850 |

[Table 5]

| | | Flux composition (% by mass) | | | | | | | | | | | | | M | Sintering temperature (°C) |
|---|---|---|---|---|---|---|---|---|---|---|---|---|---|---|---|---|
| | | Al$_2$O$_3$ | SiO$_2$ | | | MgO | F | Mn | Na+K | Fe | TiO$_2$ | Water-soluble SiO$_2$ | CaO | C | | |
| | | | Alloy-derived | Mineral-derived | Total | | | | | | | | | | | |
| Comparative Examples | 1 | 27 | 3 | 13 | 16 | 28 | 20 | 1.5 | 2.4 | 2 | 1 | 0.4 | 3 | 0.019 | 0.58 | 850 |
| | 2 | 8 | 4 | 15 | 19 | 32 | 27 | 1.2 | 2.4 | 3 | 3 | 0.5 | 5 | 0.024 | 0.84 | 850 |
| | 3 | 15 | 4 | 18 | 22 | 29 | 23 | 1.3 | 2.6 | 3 | 2 | 0.4 | 3 | 0.027 | 0.73 | 850 |
| | 4 | 18 | 3 | 6 | 9 | 33 | 27 | 1.4 | 2.5 | 2 | 3 | 0.4 | 5 | 0.016 | 0.69 | 850 |
| | 5 | 15 | 4 | 10 | 14 | 38 | 23 | 1.3 | 2.4 | 3 | 2 | 0.4 | 2 | 0.018 | 0.95 | 850 |
| | 6 | 18 | 4 | 14 | 18 | 22 | 28 | 1.1 | 2.6 | 3 | 3 | 0.4 | 5 | 0.032 | 0.45 | 850 |
| | 7 | 14 | 4 | 12 | 16 | 28 | 32 | 1.3 | 2.5 | 3 | 2 | 0.5 | 2 | 0.028 | 0.58 | 850 |
| | 8 | 20 | 5 | 14 | 19 | 33 | 13 | 1.4 | 2.4 | 4 | 3 | 0.6 | 5 | 0.016 | 0.92 | 850 |
| | 9 | 16 | 4 | 12 | 16 | 31 | 24 | 4 | 2.5 | 3 | 2 | 0.5 | 2 | 0.017 | 0.74 | 850 |
| | 10 | 17 | 4 | 14 | 18 | 30 | 25 | 1.3 | 0.1 | 3 | 3 | 0.5 | 3 | 0.041 | 0.67 | 800 |
| | 11 | 15 | 4 | 14 | 18 | 31 | 22 | 1.4 | 6.5 | 3 | 2 | 0.4 | 2 | 0.027 | 0.79 | 800 |
| | 12 | 17 | 0.4 | 18 | 18 | 31 | 25 | 1.1 | 2.5 | 0.3 | 3 | 0.5 | 3 | 0.015 | 0.69 | 800 |
| | 13 | 16 | 11 | 6 | 17 | 28 | 24 | 1.3 | 2.6 | 9 | 1 | 0.6 | 2 | 0.019 | 0.68 | 800 |
| | 14 | 14 | 5 | 10 | 15 | 29 | 24 | 1.4 | 2.5 | 4 | 10 | 0.5 | 2 | 0.018 | 0.60 | 800 |
| | 15 | 16 | 4 | 13 | 17 | 32 | 26 | 1.4 | 2.7 | 3 | 0.3 | 0.6 | 2 | 0.025 | 0.76 | 800 |
| | 16 | 17 | 4 | 13 | 17 | 30 | 25 | 1.2 | 2.5 | 3 | 2 | 1.5 | 3 | 0.028 | 0.68 | 600 |
| | 17 | 24 | 3 | 9 | 12 | 26 | 29 | 1.2 | 2.5 | 2 | 3 | 0.6 | 1 | 0.026 | 0.46 | 850 |
| | 18 | 12 | 6 | 14 | 20 | 35 | 18 | 1.3 | 2.4 | 5 | 1 | 0.4 | 6 | 0.029 | 1.13 | 850 |
| | 19 | 16 | 4 | 12 | 16 | 29 | 23 | 1.4 | 2.4 | 3 | 2 | 0.4 | 8 | 0.015 | 0.71 | 850 |

The balance of the steel plate composition shown in the above Table 1 and of the wire composition shown in the above Table 2 includes Fe and inevitable impurities. "M" shown in the above Tables 4 and 5 indicates a value of $[MgO]/([Al_2O_3] + [CaF_2] + [TiO_2])$.

The respective fluxes in Examples and Comparative Examples were evaluated for the diffusion hydrogen content in the weld metal, the impact test, the bead outer appearance, the bead shape, the slag removability, and the welding defect (intrinsic and extrinsic defects).

<Diffusion Hydrogen Content>

A diffusion hydrogen content in the weld metal was measured based on the method defined by JIS Z 3118:2007 in principle. In the present example, samples having a diffusion hydrogen content of 3.5 ml/100 g or less were determined to be pass.

<Impact Test>

An impact test was carried out based on the method defined by JIS Z 2242:2005 and evaluated by the value of Charpy absorbed energy at -40°C. In the present example, samples having Charpy absorbed energy of 100 J or more were determined to be pass.

<Bead Outer Appearance>

The outer appearance of a bead, mainly regarding the waved shape and glaze of the bead, was evaluated by visually observing a welded part. As a result, samples having beads with metallic glaze without any disturbed part of the bead waved shape were rated "A"; samples having beads with metallic glaze and one disturbed part of the bead waved shape per unit welding length (1 m) were rated "B"; samples having beads without any glaze and with two to four disturbed parts of the bead waved shape per unit welding length (1 m) were rated "C"; samples having beads without any metallic glaze and with five or more disturbed parts of the bead waved shape per unit welding length (1 m) were rated "D"; and samples rated "A" or "B" were determined to be pass.

<Bead Shape>

The shape of a bead, mainly regarding uneven part of the bead and wettability to the base metal, was evaluated by visually observing the welded part of each sample. As a result, samples having beads with a very good shape were rated "A"; samples having beads with a good shape were rated "B"; samples having beads with a slightly defective shape were rated "C"; samples having beads with a defective shape were rated "D"; and samples rated "A" or "B" were determined to be pass.

<Slag Removability>

The slag removability was evaluated based on the easiness of slag removal and the presence or absence of slag burning. Specifically, samples from which the slag was naturally removed with no burning were rated "A"; samples from which the slag was naturally removed with three or less burned parts per unit welding length (1 m) were rated "B"; samples from which the slag was not naturally removed with four to nine burned parts per unit welding length (1 m) were rated "C"; and samples from which the slag was not naturally removed with ten or more burned parts per unit welding length (1 m) were rated "D". In the present example, samples rated "A" or "B" were determined to be pass.

<Arc Stability>

The arc stability was evaluated based on the amplitude of voltage and current oscillations during welding. Specifically, samples having the welding current of $\pm 50$ A and the arc voltage of $\pm 2$ V were rated "A"; samples having the welding current of $\pm 100$ A and the arc voltage of $\pm 2$ V were rated "B"; samples having the welding current of $\pm 100$ A and the arc voltage of $\pm 4$ V were rated "C"; and samples in which welding was difficult to perform were rated "D". In the present example, samples rated "A" or "B" were determined to be pass.

<Welding Defects>

Welding defects (intrinsic defects) generated in the weld metal, mainly regarding a pore defect, a slag inclusion, lack of fusion, and the like, were evaluated. Samples with no welding defects (intrinsic defects) were rated "A"; samples having a ratio of occurrence of the welding defects (intrinsic defects) per unit welding length (1 m) of 0.5% or less were rated "B"; samples having a ratio of occurrence of the welding defects (intrinsic defects) per unit welding length (1 m) exceeding 0.5% and of 1.0% or less were rated "C"; samples having a ratio of occurrence of the welding defects (intrinsic defects) per unit welding length (1 m) exceeding 1.0% were rated "D", and samples rated "A" or "B" were determined to be pass.

In the detection of welding defects (intrinsic defects), an X-ray radiograph taken in accordance with JIS Z 3104 was used. A ratio of occurrence of the welding defects per unit welding length (1 m) in the evaluation of welding defects (intrinsic defects) was determined in the following manner. That is, the size (length) of each defect (flaw) was measured in accordance with JIS Z 3104 and the total length of defects (flaws) was calculated, and then the thus obtained total length was divided by an effective length of a test section, followed by expression in terms of unit welding length.

Whereas, the welding defects (extrinsic defects), mainly regarding welding defects generated at the surface of the weld metal, such as an undercut part and a pockmark, were evaluated. Samples with no welding defects (extrinsic defects) were rated "A"; samples having a ratio of occurrence of the welding defects (extrinsic defects) per unit welding length (1 m) of 0.5% or less were rated "B"; samples having a ratio of occurrence of the welding defects (extrinsic defects) per unit welding length (1 m) exceeding 0.5% and of 1.0% or less were rated "C"; and samples having a ratio of occurrence of the welding defects (extrinsic defects) per unit welding length (1 m) exceeding 1.0% were rated "D" , and samples rated "A" or "B" were determined to be pass.

Welding defects (extrinsic defects) were visually detected. A ratio of occurrence of the welding defects per unit welding length (1 m) in the evaluation of welding defects (extrinsic defects) was determined in the following manner. That is, the length of each undercut part and pockmark was visually measured and the total length of welding defects (extrinsic defects) was calculated, and then the thus obtained total length was divided by an effective length of the same test section as that of welding defects (intrinsic defects), followed by expression in terms of unit welding length.

The above-mentioned evaluation results are collectively shown in Tables 6 and 7 below.

[Table 6]

| | | Evaluation results | | | | | | | | | | | | |
|---|---|---|---|---|---|---|---|---|---|---|---|---|---|---|
| | | Diffusion hydrogen content (ml/100 g) | Impact test [-40°C] (J) | Welding conditions A | | | | | | Welding conditions B | | | | | |
| | | | | Bead outer appearance | Bead shape | Slag removability | Arc stability | Welding defect (intrinsic) | Welding defect (extrinsic) | Bead outer appearance | Bead shape | Slag removability | Arc stability | Welding defect (intrinsic) | Welding defect (extrinsic) |
| Examples | 1 | 2.5 | 161 | A | A | A | A | A | A | A | A | A | A | A | A |
| | 2 | 2.6 | 129 | B | B | A | A | A | A | B | B | A | A | A | A |
| | 3 | 2.8 | 145 | A | B | B | A | A | A | A | B | B | A | A | A |
| | 4 | 2.3 | 126 | A | B | B | A | A | A | A | B | B | A | A | A |
| | 5 | 3.4 | 152 | A | B | A | A | A | B | A | B | A | A | A | B |
| | 6 | 2.4 | 134 | B | B | A | A | A | B | B | B | A | A | A | B |
| | 7 | 2.9 | 158 | A | B | A | A | A | A | A | B | A | A | A | A |
| | 8 | 2.1 | 112 | A | B | B | A | A | B | A | B | B | A | A | B |
| | 9 | 3.2 | 143 | A | B | B | A | A | A | A | B | B | A | A | A |
| | 10 | 2.5 | 132 | A | A | B | A | A | A | A | A | B | A | A | A |
| | 11 | 2.8 | 143 | B | B | A | A | B | B | B | B | A | A | B | B |
| | 12 | 3.1 | 125 | A | A | B | A | A | B | A | A | B | A | A | B |
| | 13 | 2.9 | 153 | B | B | A | A | A | A | B | B | A | A | A | A |
| | 14 | 2.9 | 129 | A | A | B | A | A | B | A | A | B | A | A | B |
| | 15 | 2.8 | 138 | B | B | B | A | A | A | B | B | B | A | A | A |
| | 16 | 3.1 | 141 | A | B | A | A | B | B | A | B | A | A | B | B |
| | 17 | 3.2 | 153 | A | B | B | A | A | A | A | B | B | A | A | A |
| | 18 | 3.2 | 143 | A | B | A | A | A | B | A | B | A | A | A | B |
| | 19 | 2.9 | 139 | A | A | B | A | A | A | A | A | B | A | A | A |
| | 20 | 3.4 | 145 | A | B | A | A | A | A | A | B | A | A | A | A |
| | 21 | 3.1 | 115 | A | A | B | A | A | B | A | A | B | A | A | B |
| | 22 | 2.9 | 149 | B | B | A | B | A | A | B | B | A | B | A | A |

| | | | Evaluation results | | | | | | | | | | | | |
| | | | Welding conditions A | | | | | | Welding conditions B | | | | | |
| | | Diffusion hydrogen content (ml/100 g) | Impact test [-40°C] (J) | Bead outer appearance | Bead shape | Slag remov-ability | Arc sta-bility | Welding defect (in-trinsic) | Welding defect (ex-trinsic) | Bead outer appearance | Bead shape | Slag remov-ability | Arc sta-bility | Welding defect (in-trinsic) | Welding defect (ex-trinsic) |
|---|---|---|---|---|---|---|---|---|---|---|---|---|---|---|---|
| | 23 | 3.4 | 109 | B | B | A | B | A | A | B | B | A | B | A | A |
| | 24 | 3.1 | 147 | A | A | A | A | A | B | A | A | A | A | A | B |
| | 25 | 3.4 | 129 | B | B | B | A | A | A | B | B | B | A | A | A |
| | 26 | 3.2 | 149 | A | A | A | A | A | A | A | A | A | A | A | A |
| | 27 | 3.0 | 152 | A | B | A | A | A | A | A | B | A | A | A | A |
| | 28 | 3.2 | 157 | A | A | A | A | A | A | A | A | A | A | A | A |
| | 29 | 2.9 | 147 | A | A | A | A | A | A | A | A | A | A | A | A |
| | 30 | 3.2 | 137 | A | A | A | A | A | A | A | A | A | A | A | A |
| | 31 | 2.8 | 146 | B | B | A | A | A | A | B | B | A | A | A | A |
| | 32 | 2.7 | 131 | A | A | A | A | A | B | A | A | A | A | A | A |
| | 33 | 2.5 | 121 | A | A | A | A | A | D | A | A | A | A | A | C |

EP 3 081 328 A1

[Table 7]

| | | | Evaluation results | | | | | | | | | | | | | |
|---|---|---|---|---|---|---|---|---|---|---|---|---|---|---|---|---|
| | | Diffusion hydrogen content (ml/100 g) | Impact test [-40°C] (J) | Welding conditions A | | | | | | Welding conditions B | | | | | |
| | | | | Bead outer appearance | Bead shape | Slag remov-ability | Arc sta-bility | Welding defect (in-trinsic) | Welding defect (ex-trinsic) | Bead outer appearance | Bead shape | Slag remov-ability | Arc sta-bility | Welding defect (in-trinsic) | Welding defect (ex-trinsic) |
| Comparative Examples | 1 | 2.6 | 89 | B | D | B | B | B | B | B | D | B | B | B | B |
| | 2 | 3.5 | 145 | B | C | B | B | B | B | B | C | B | B | B | B |
| | 3 | 2.9 | 161 | B | B | D | B | B | B | B | B | C | B | B | B |
| | 4 | 3.4 | 151 | C | C | B | B | B | B | C | C | B | B | B | B |
| | 5 | 3.7 | 139 | B | C | B | B | D | D | B | C | B | B | D | D |
| | 6 | 2.3 | 143 | B | B | D | B | B | B | B | B | C | B | B | B |
| | 7 | 2.5 | 127 | B | D | B | B | B | B | B | D | B | B | B | B |
| | 8 | 2.8 | 103 | B | B | B | B | B | C | B | B | B | B | B | C |
| | 9 | 2.9 | 98 | B | B | B | B | B | B | B | B | A | B | B | B |
| | 10 | 2.7 | 143 | C | C | B | D | B | B | C | C | B | D | B | B |
| | 11 | 3.9 | 152 | C | C | B | B | B | B | C | C | B | B | B | B |
| | 12 | 2.8 | 139 | B | B | B | B | B | C | B | B | B | B | B | C |
| | 13 | 2.7 | 88 | C | C | D | B | B | B | C | C | C | B | B | B |
| | 14 | 2.9 | 124 | B | C | B | B | B | B | B | C | B | B | B | B |
| | 15 | 2.9 | 146 | B | C | C | B | B | B | A | B | B | A | A | A |
| | 16 | 4.8 | 137 | A | A | A | A | A | A | A | A | A | A | A | A |
| | 17 | 3.9 | 142 | A | A | C | A | A | A | A | A | B | A | A | A |
| | 18 | 4.7 | 139 | B | B | B | B | B | B | B | B | B | B | B | B |
| | 19 | 3.3 | 135 | D | D | B | B | B | B | D | D | B | B | B | B |

In the flux of Comparative Example No. 1 shown in Table 7, an $Al_2O_3$ content exceeded 25% by mass, resulting in defective bead shape. Whereas, in the flux of Comparative Example No. 2, an $Al_2O_3$ content was less than 10% by mass, resulting in inferior bead shape. In the flux of Comparative Example No. 3, a $SiO_2$ content exceeded 20% by mass, resulting in inferior slag removability. Whereas, in the flux of Comparative Example No. 4, a $SiO_2$ content was less than 10% by mass, resulting in inferior bead outer appearance and bead shape.

In the flux of Comparative Example No. 5, an MgO content exceeded 35% by mass, resulting in inferior bead shape, further generating welding defects inside and at the surface of the weld metal. Whereas, in the flux of Comparative Example No. 6, an MgO content was less than 25% by mass, causing burning, resulting in inferior slag removability. In the flux of Comparative Example No. 7, an F content exceeded 30% by mass, resulting in inferior bead shape. Whereas, in the flux of Comparative Example No. 8, an F content is less than 15% by mass, thus generating welding defects, including undercut parts and pockmarks.

In the flux of Comparative Example No. 9, an Mn content (in terms of MnO) is 2% by mass or more, causing an increase in diffusion hydrogen content in the weld metal, resulting in reduction of the toughness. In the flux of Comparative Example No. 10, the total of a Na content (in terms of $Na_2O$) and a K content (in terms of $K_2O$) was less than 0.5% by mass, so that the arc stability was drastically reduced, and both the bead outer appearance and the bead shape were degraded. As a result, the welding was difficult to perform. Whereas, in the flux of Comparative Example No. 11, the total of a Na content (in terms of $Na_2O$) and a K content (in terms of $K_2O$) exceeded 5.5% by mass, resulting in inferior bead outer appearance and bead shape.

In the flux of Comparative Example No. 12, an Fe content (in terms of FeO) was less than 0.5% by mass, generating welding defects, such as the undercut parts and pockmarks, at the surface of the weld metal. Whereas, in the flux of Comparative Example No. 13, an Fe content (in terms of FeO) exceeded 5% by mass, resulting in inferior bead outer appearance and bead shape, further degrading the slag removability. In the flux of Comparative Example No. 14, a $TiO_2$ content exceeded 8% by mass, thereby degrading the bead shape. Whereas, in the flux of Comparative Example No. 15, the $TiO_2$ content is less than 1% by mass, thus degrading the slag removability and bead shape.

In the flux of Comparative Example No. 16, since the water-soluble $SiO_2$ content exceeded 1.0% by mass, the diffusion hydrogen content in the weld metal was increased. In the flux of Comparative Example No. 17, since M (= $[MgO]/([Al_2O_3] + [CaF_2] + [TiO_2])$) was less than 0.5, the slag removability was degraded. Whereas, in the flux of Comparative Example No. 18, since M exceeded 1.10, the diffusion hydrogen content in the weld metal was increased. In the flux of Comparative Example No. 19, since a CaO content exceeded 6% by mass, bead outer appearance and bead shape were degraded.

In contrast, the fluxes in Examples Nos. 1 to 33 shown in Table 6 satisfied the scope of the present invention, and thus had excellent bead outer appearance, bead shape, slag removability, and arc stability, resulting in no welding defects (intrinsic and extrinsic defects). Particularly, the fluxes in Examples Nos. 1 to 32 having the C content restricted to 0.2% by mass or less exhibited high effect of suppressing the generation of pockmarks as compared with the flux in Example No. 33 having the C content exceeding 0.2% by mass, and thus the fluxes were excellent in the resistance to pockmark.

As can be confirmed from the result mentioned above, the use of the flux in the present invention can improve the welding workability and reduce the diffusion hydrogen content in the weld metal in the use of either AC welding or DC welding.

This application claims priority based on Japanese Patent Application No. 2013-257686 filed on December 13, 2013 in Japan, the disclosure of which is incorporated by reference herein.

## Claims

1. A flux for submerged arc welding, comprising:

   MgO: 25 to 35% by mass;
   F (in terms of $CaF_2$): 15 to 30% by mass;
   $Al_2O_3$: 10 to 25% by mass;
   $SiO_2$: 10 to 20% by mass;
   at least one of Na (in terms of $Na_2O$) and K (in terms of $K_2O$): 0.5 to 5.5% by mass in total;
   Fe (in terms of FeO): 0.5 to 5% by mass;
   $TiO_2$: 1 to 5% by mass;
   CaO: 6% by mass or less; and
   Mn (in terms of MnO) : less than 2.0% by mass; and further comprising:

   water-soluble $SiO_2$: less than 1% by mass; wherein the flux satisfies the following numerical expression (I) :

$$0.5 \leqq \frac{[MgO]}{[Al_2O_3] + [CaF_2] + [TiO_2]} \leqq 1.1 \quad \cdots \quad (\text{I})$$

where [MgO] is an MgO content, $[Al_2O_3]$ is an $Al_2O_3$ content, $[CaF_2]$ is an F content (in terms of $CaF_2$), and $[TiO_2]$ is a $TiO_2$ content.

2. The flux for submerged arc welding according to claim 1, wherein a C content is 0.2% by mass or less.

3. The flux for submerged arc welding according to claim 1 or 2, wherein the flux is sintered at a temperature of 800°C or higher.

## Fig.1

25mm

30°

13mm

## INTERNATIONAL SEARCH REPORT

International application No.

PCT/JP2014/082456

### A. CLASSIFICATION OF SUBJECT MATTER
*B23K35/362*(2006.01)i, *B23K35/30*(2006.01)n, *C22C38/00*(2006.01)n, *C22C38/04*
(2006.01)n

According to International Patent Classification (IPC) or to both national classification and IPC

### B. FIELDS SEARCHED

Minimum documentation searched (classification system followed by classification symbols)
B23K35/36-35/362, 35/365-35/38

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 60-64792 A (Kawasaki Steel Corp.), 13 April 1985 (13.04.1985), claims; table 1; table 3, particularly, B5 (Family: none) | 1-3 |
| A | JP 2013-141681 A (Kobe Steel, Ltd.), 22 July 2013 (22.07.2013), claims; tables 1 to 5 & KR 10-2013-0082117 A | 1-3 |
| A | JP 2007-136516 A (Kobe Steel, Ltd.), 07 June 2007 (07.06.2007), claims; tables 1 to 10 (Family: none) | 1-3 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 January 2015 (14.01.15) | 27 January 2015 (27.01.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

International application No.

PCT/JP2014/082456

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-230983 A  (Kobe Steel, Ltd.), 19 August 2003 (19.08.2003), claims; tables 1 to 13 & KR 10-0513214 B1      & KR 10-2003-0067569 A | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 49070839 A
- JP 53095144 A
- JP 51087444 A
- JP 9099392 A
- JP 62068695 A
- JP 2013257686 A